(19) Europäisches Patentamt
European Patent Office
Office européen des brevets

(11) **EP 2 355 423 A1**

(12) **EUROPEAN PATENT APPLICATION**

(43) Date of publication:
**10.08.2011 Bulletin 2011/32**

(51) Int Cl.:
***H04L 12/56*** (2006.01)

(21) Application number: **11152551.5**

(22) Date of filing: **28.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.01.2010 EP 10152100**
**25.11.2010 EP 10192606**

(71) Applicants:
• **Deutsche Telekom AG**
**53113 Bonn (DE)**
• **Technische Universität Berlin**
**10623 Berlin (DE)**

(72) Inventors:
• **Uhlig, Steve**
**10965 Berlin (DE)**
• **Feldmann, Anja**
**10717 Berlin (DE)**
• **Sarrar, Nadi**
**10965 Berlin (DE)**
• **Sherwood, Robert**
**Los Altos**
**California (US)**

(74) Representative: **Vossius & Partner**
**Siebertstrasse 4**
**81675 München (DE)**

(54) **System and method for routing data packets over an Internet Protocol network**

(57) The present invention revisits the architecture of IP routers based on the observations i) that the quality of open source routing software is getting to a point where it is usable in carrier grade networks and ii) that the major difference between switches and routers is in the software. Accordingly, the present invention proposes an alternative low cost high-performance router concept that a) uses commodity PC hardware with an open source software router for the control path and b) couples it with lower cost switching hardware by delegating packet forwarding to the switch. The present invention describes an implementation scenario and shows that the system according to the present invention is capable of handling full IP routing tables and the traffic requirements of a carrier aggregation network.

**Description**

Technical Field

The present invention relates to a system and a method for routing data packets over an Internet Protocol network, in particular to a hardware accelerated software router and routing method.

Background of invention

Routers are in principle simple packet processing devices. Their main task is to determine for incoming packets the appropriate outgoing interface based on the content of their routing table. However, this simplicity is deceiving as i) computing the routing table is a complex task, ii) performing the longest prefix match at line rate is non trivial, and iii) achieving multiple terabit throughput is challenging. Therefore, there is a limited number of vendors offering high-performance routers and these are expensive.

The basic function of a switch or router is forwarding, which consists of the operation of transferring a packet from an input interface to an output interface. The forwarding function requires two interrelated processes to move information in the network, i.e., making a routing decision by routing and moving packets to the next-hop destination by switching. Many switch/routers perform both routing and switching. The distinction between switches and routers is therefore not really applicable in the Internet.

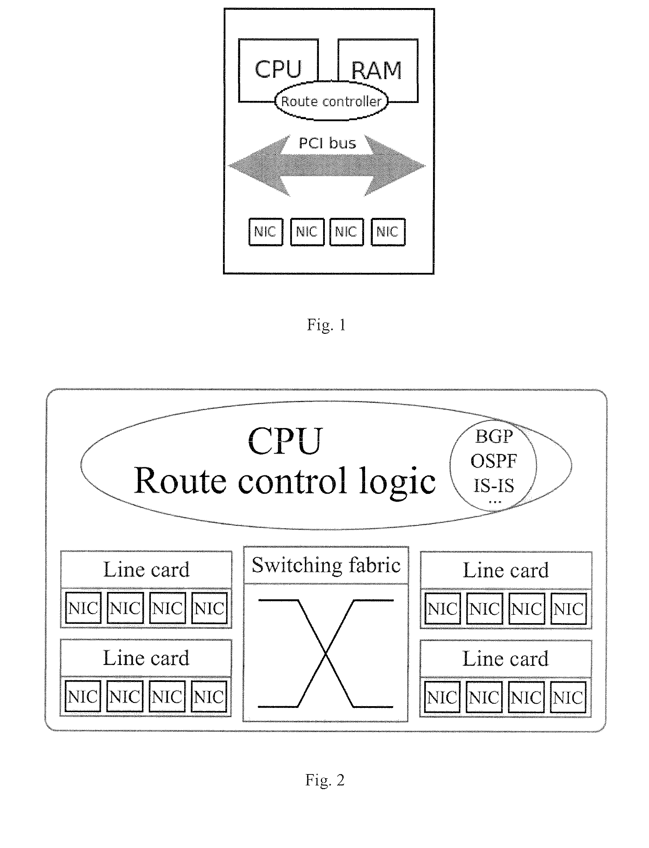

The hardware architecture of a switch/router includes a chassis, which contains basic components such as power supply, fans, slots, ports and modules that slide into the slots. The architecture can be very similar to standard personal computers as shown in Fig. 1. In this case, forwarding is done by the main processor and cannot handle high data rates, cf. [1]. The other type of switch/routers relies on a distributed architecture with a central route controller that communicates with modules inserted into the slots called line cards which are the actual printed circuit boards as shown in Fig. 2. With this second architecture, the main processor, so-called route controller, is generally not involved in the forwarding operations. The route controller, be it on the same chassis as shown in Fig. 2 or on another PC-based platform such as [5] relies either on open-source software or proprietary code as on commercial routers.

In order to match a packet to a destination port to which it has to be forwarded, switches and routers keep a forwarding table in memory, on which lookups are performed. This forwarding table is based on the routing information kept by the route controller and involves routing protocols that are outside the scope of this invention. Different types of memories exist, with different speeds. Fast memories are expensive, and therefore have limited size on some of the existing network equipment, see [4]. For simplicity, existing switches and routers keep a complete copy of the forwarding table on the switch, as shown in Fig. 2. This is applicable for the second architecture described above. The problem with this second architecture is that when equipment has limited memory to keep entries for all existing destinations, no solution exists today to select a subset of the forwarding entries in such a way that forwarding performance is acceptable.

The further problem is the lack of route caching performed on conventional switches and routers, see [1]. A cache is usually a fast memory, e.g. TCAM, used to store entries that need fast access, see [4]. Existing mechanisms to cache a set of objects, e.g. in [2] or [3], among a set of potential objects to be fetched do not consider to whole set of objects that can be selected, but only replace entries in the cache based on cache misses, i.e. requests reaching the cache that refer to objects not referenced in the cache. As a consequence, existing techniques cannot keep the size of the cache as small as necessary to achieve a given hit rate, and need to update the cache as frequently as cache misses occur.

Cited references

In order to improve the legibility, the cited references in the present application referred to as the follows:

[1] J. Aweya. IP Router Architecture: an Overview. Journal of Systems Architecture, 46:483-511, 1999.

[2] Y. Zhou and J. Philbin. The Multi-Queue replacement algorithm for second level buffer caches. Proceedings of the 2001 USENIX Annual Technical Conference, pp 91-104, 2001.

[3] N Megiddo and D. Mohda. ARC: A self-tuning, low overhead replacement cache. Proc. of 2nd USENIX conference on File Storage Technologies, San Francisco, USA, March 31-April 2003.

[4] R. Whittle. SRAM-based IP forwarding eliminates the need for route aggregation. Internet draft, draft-whittle-sram-ip-forwarding-01, work in progress, October 2007.

[5] M. Dobrescu, N. Egi, K. Argyraki, B. Chun, K. Fall, G. Iannaconne, A. Knies, M. Manesh and S. Ratsanamy. RouteBricks: Exploiting Parallelism to scale Software Routers. Proc. of the 22nd ACM Symposium on Operating Systems Principles (SOSP), October 2009.

[6] ARJSTA NETWORKS. Fos: An extensible operating system. www.aristanetworks.com/en/EOS, 2009.

[7] EDWARDS, J. Enterprises cut costs with open-source routers. http://www.computerworld.com/s/article/9133851, 2009

[8] J. REXFORD, J. WANG, Z. X., AND ZHANG, Y. Bgp routing stability of popular destinations. In Proc. ACMIMC (2002).

[9] Quagga Rouling Suile. http://www.quagga.net

[10] FOULI, K., AND MAIER, M. The road to Carrier-Grade Ethernet. IEEE Communications Magazine 47, 3 (March 2009).

[11] McKEOWN, N., ANDERSON, T., BALAKRISHNAN, H., PARULKAR, G., PETERSON, L., REXFORD, J., SHENKER, S., AND TURNER, J. OpenFlow: enabling innovation in campus networks. ACM CCR (2008).

[12] CLAFFY, K. C, AND BROWNLEE, N. Understanding Internet traffic streams: Dragonflies and Tortoises. IEEE Communications Magazine (2002).

[13] FANG, W., AND PETERSON, L. Inter-as traffic patterns and their implications. In Proc. It, "EE Global Internet (1999).

[14] FELDMANN, A., GREENBERG, A., LUND, C, REINGOLD, N., REXFORD, J., AND TRUE, F. Deriving traffic demands for operational IP networks: Methodology and experience. In Proc. ACM SIGCOMM (2000).

[15] WALLERICH, J., DREGER, H., FELDMANN, A., KRISHNAMURTHY, B., AND WILLINGER, W. A methodology for studying persistency aspects of internet 110ws. ACM CCR (2005).

[16] MAENNEL, 0., AND FELDMANN, A. Realistic BGP traffic for test labs. In Proc. ACM SIGCOMM(2002).

[17] CISCO. NetFlow services and applications. White paper, available from http://www.cisco.com/warp/public/732/netflow, 1999.

[18] CLAISE, B. Specification ofthe IP flow information export (IPFIX) protocol for the exchange of IP traffic t10w information. Internet Engineering Task Force, RFC510 I, 2008.

[19] PHAAL, P., PANCHEN, S., AND McKEE, N. InMon Corporalion's sFlow: A Method for Monitoring Traffic in Switched and Routed Networks. Request for Comments 3176, Internet Engineering Task Force, Sept. 2001.

[20] DOBRESCU, M., EGI, N., ARGYRAKI, K., CHUN, B., FALL, K., IANNACCONE, G., KNIES, A., MANESH, M., AND RATNASAMY, S. Route Bricks: exploiting parallelism to scale software routers. In Proc. o/ACMSOSP (2009).

[21] YANG, X., CLARK, D., AND BERGER, A. NIRA: anew inter-domain mulling architecture. IEEE/ACMTrans. Netw. 15,4 (2007), 775~788.

[22] BALLANI, H., FRANCIS, P., CAO, T., AND WANC, J. Making routers last longer with viaggre. In Proc. NSDI (2009).

## Summary of the invention

The open source routing software in [6] to [9] is already deployed within enterprise and internet service provider, ISP networks, for specialized tasks. Its quality is getting really close to carrier grade. However, PC based routers with open source routing software do not yet offer the throughput needed for ISP's purposes.

Ethernet is becoming the layer-2 technology of choice [10] even within ISP networks due to its price performance trade-off. Moreover, Ethernet switches can often be used as Layer-3 switches. Such layer-3 switches have limits as they are not designed to replace backbone routers. Nevertheless, current switches, e.g., from vendors such as HP, NEC, Cisco, contain components, e.g., TCAMs, for performing longest prefix matching at line rate and offer multiple terabit throughput.

The present invention revisits the architecture of IP routers based on the observations i) that the quality of open source routing software is getting to a point where it is usable in carrier grade networks and ii) that the major difference between switches and routers is in the software. Accordingly, the present invention proposes an alternative low cost high-performance router concept that a) uses commodity PC hardware with an open source software router for the control path and b) couples it with lower cost switching hardware by delegating packet forwarding to the switch, wherein the switch is preferably programmable. The result is architecture for hardware accelerated software router. The present invention describes an implementation and shows that the system according to the present invention is capable of handling full IP routing tables and the traffic requirements of a carrier aggregation network.

The object of the present invention can be achieved by features of the independent claims. Further preferred embodiments of the present invention are defined in the dependent claims.

The present invention provides a system of routing data packets over an Internet Protocol network, wherein the system comprises: a computer comprising a software routing controller for computing a routing table and a forwarding table based on the routing table, and a first memory for maintaining the routing table and the forwarding table; a switching hardware comprising a second memory for caching the forwarding table, a switching controller for managing forwarding of the data packets on the switching hardware and communication with the computer; and a communication channel arranged between the computer and the switching hardware for transferring control traffic.

The switching hardware may comprise at least one line card having a plurality of network interfaces, wherein the software routing controller being preferably adapted to relay the control traffic, and to provide a plurality of virtual interfaces corresponding to the plurality of network interfaces of the switching hardware. The switching hardware is preferably programmable.

According to the present invention, the second memory is faster than the first memory.

According to the present invention, the software routing controller preferably receives and forwards data packets including routing updates and ARP messages to the computer, updates the cached forwarding table on the switching hardware through the communication channel, and collects traffic statistics from the forwarding table of the computer and the cached forwarding table of the switching hardware.

According to the present invention, the switching hardware preferably further comprises a switching fabric being a fast forwarding path for particular data packets between the plurality of network interfaces, if the relevant forwarding information for the particular data packets is in the cached forwarding table. The system according to the present invention may further comprise a forwarding channel being a slow forwarding path for particular data packets between the switching hardware and the computer or a further computer, if the relevant forwarding information for the particular data packets is not in the cached forwarding table.

According to the present invention, the software routing controller is preferably adapted to determine the target network interface of the switching hardware for the data packets, by associating the target network interface with one of the plurality of the virtual network interfaces on the computer.

According to the present invention, the software routing controller is preferably adapted to rewrite the layer-2 header of the data packets on the basis of the association of the network interface, prior to sending the data packets back to the switching hardware, and the switching fabric is preferably adapted to forward the data packets using the rewritten layer-2 header to the target network interface.

According to the present invention, the updates to the cached forwarding table preferably comprise entries recently computed by the computer and entries of popular destinations according to the statistics from the forwarding table of the computer.

According to the present invention, the software routing controller is preferably adapted to dynamically define a set of entries to be placed in the forwarding table cache, the set cardinality not exceeding a given number m.

According to another aspect, the present invention provides a Method of routing data packets over an Internet Protocol network, wherein the method comprises the steps of: a) computing a routing table and a forwarding table based on the routing table by a software routing controller running on a computer, and maintaining the routing table and the forwarding table in a first memory of the computer; b) caching the forwarding table in a second memory of a switching hardware, managing forwarding of the data packets on the switching hardware and communication with the computer by a switching controller of the switching hardware; c) transferring the control traffic through a communication channel arranged between the computer and the switching hardware.

The switching hardware preferably comprises at least one line card having a plurality of network interfaces, wherein the method further comprises the steps of: relaying the control traffic and providing a plurality of virtual interfaces corresponding to the plurality of network interfaces of the switching hardware, by the software routing controller.

The method preferably further comprises the steps of: receiving and forwarding the data packets including routing updates and ARP messages to the computer by the software routing controller; updating the cached forwarding table on the switching hardware through the communication channel by the software routing controller; and collecting traffic statistics from the forwarding table of the computer and the cached forwarding table of the switching hardware, by the software routing controller.

The method preferably further comprises the step of: determining the target network interface of the switching hardware for the data packets by the software routing controller, by associating the target network interface with one of the plurality of the virtual network interfaces on the computer.

The method preferably further comprises the steps of: rewriting layer-2 header of the data packets on the basis of the association of the network interface by the software routing controller, prior to sending the data packets back to the switching hardware; and forwarding the data packets using the rewritten layer-2 header to the target network interface by the switching hardware.

*Preferred advantages*

The system according to the present invention is made of the switch having a fast memory such as TCAM which is used as a route cache. The switch is connected to the routing controller. The routing controller decides which entries have to be placed inside the cache on the switch, based on a prediction technique. The controller communicates the changes to be done in the cache through the communication channel. When packets arrive at the switch that do not match any entry in the cache, these packets are sent to the routing controller that performs the forwarding of the packets and sends them to the appropriate output interface on the switch.

In general, the system of the present invention utilises the switching hardware as a flexible forwarding engine for high-performance forwarding, whereas the commodity personal computer serves both as a routing controller as well as for handling the traffic that was chosen not to be forwarded by the switch.

The preferred advantage of the present invention are a) separated development cycle for hardware based forwarding and control software, b) gaining flexibility as routers are increasingly expected to do more than route packets, c) having a hardware accelerated software based alternative to traditional routers such as those by conventional routers, in particular as switches are becoming a commodity. The system and method according to the present invention have the potential to bring the flexibility of software routers in previously unexplored contexts, e.g., data centers and aggregation networks.

Several prediction techniques are possible that require different types of statistics about entries in the cache and about packets that do not match the cache. The principle of the cache management is to select a set of entries that fits into the cache and that limits the number of packets that will not match the cache, and limit the number of control messages exchanged over the control channel.

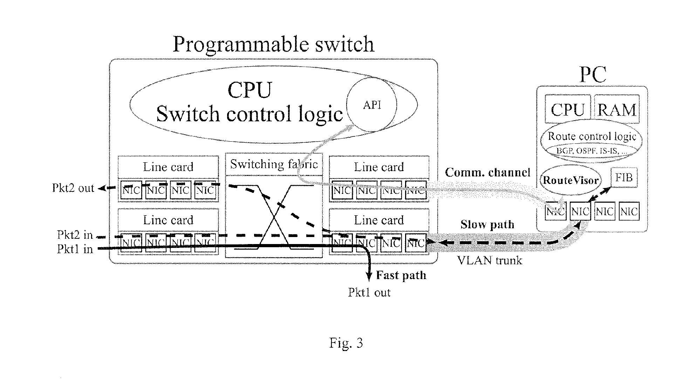

The present invention allows remotely controlling a switch with limited functionalities and using it as a high-performance router thanks to a control channel between the switch and a controller as shown in Fig. 3. The present invention relies on open-source software to obtain the routing information as in [5]. Assuming that fast memory, e.g. TCAM, is available on the switch, which is the case on existing switches, our technique is able to populate and update the entries of the forwarding table of the switch. The present invention allows using of the switch as if it was a router for external switches and routers in the network. The present invention includes a prediction technique based on usage statistics from the switch, which makes possible to use the fast memory of the switch as a cache. The prediction technique coupled with the cache on the switch and the control channel make the present invention distinct from the state of the art.

The present invention allows keeping an arbitrarily small subset of the objects in fast memory while incurring very limited performance penalty compared to other techniques. In the system according the present invention, performance is defined through the number of packets that trigger a cache miss as well as the number of cache updates required during a given time interval. The main features of the technique is to ensure that a maximum number of packets will hit the cache and at the same time ensure that few updates to the cache will be necessary to ensure this property over time, for any given size of the cache.

<u>Brief description of the figures</u>

The following sections the present invention will be explained with the figures:

Fig. 1 shows schematic view of hardware architecture of a conventional router which may comprise power supply, fans, slots, ports and modules that slide into the slots;

Fig. 2 shows another type of routers which rely on a distributed architecture with a central route controller that communicates with modules inserted into the slots called line cards which are the actual printed circuit boards;

Fig. 3 shows a schematic architecture of the system according to the present invention; wherein the software routing controller of the PC communicates via the communication channel with the switch controller on the switch hardware, and wherein the slow path is indicated as dashed black arrow and the fast path as solid black arrow;

Fig. 4 shows the slow path requirements for the exemplary implementation and FIB size for TROUT, wherein Fig. 4a shows the long-linear scale for TROUT, Fig. 4b shows log-log scale for TROUT, and Fig 4c shows chum for various FIB sizes;

Fig. 5 shows the scalability and misprediction for the exemplary implementation, wherein Fig. 5a shows the scalability for TRBASE, Fig. 5b shows the slow path penalty for missing prefixes, and Fig. 5c shows the slow path penalty across time with a FIB size of 2000, Fig. 6d shows the similar measurement corresponding to Fig. 6a-c;

Fig. 6 shows the traffic workload characteristics for the exemplary implementation, wherein Fig. 6a shows the CDF, i.e. popularity across destination prefixes, Fig. 6b shows the impact of cache update lag on cache miss rates, and Fig. 6c shows the FIB chum for a one time bin lag;

Fig. 7 shows the exemplary evaluation diagrams of the FIBPredict for TROUT, wherein Fig. 7a shows the FIB cache churn, and Fig. 7b and 7c show the slow path requirements.

Detailed description of the present invention

The present invention will be hereinafter described in accordance with the accompanied figures in more detail, by means of exemplary implementation scenarios and performance aspects as well as feasibility of the systems and the method.

Fig. 3 shows an implementation example using the switch as an alternative route cache and therefore as fast path forwarding. The commodity PC serves as a slow path and routing controller. However, switch TCAMs are much more powerful than traditional route caches. In a traditional cache, upon a miss one has to install an entry so that the miss can be served. This is not the case in our design as such packets can be handled via the slow path. Therefore, the system according to the present invention has a wealth of new algorithmic opportunities far realising smart prefix selection strategies for maximizing the number of packets handled by the fast path while minimising the number of TCAM updates. Moreover, such an algorithm can be designed for example to adapt arbitrarily fast to changes in the routing tables, or to changes in the traffic pattern. Indeed, the present invention shows that the performance of the FIBPredict strategy is very close to the optimal performance and outperforms traditional LRU and LFU strategies substantially.

In order to demonstrate that the concept of the present invention is feasible, the limitations of switches as well as commodity PC should be overcome. There are several components to be defined as the follows:

Control path: The major component of the control path is the proprietary routing software. However, we argue that open source software, e.g., Quagga [9], is becoming a viable alternative and is already in use by carriers [7].

Switch control: One may question whether a switch can be controlled by another box and thus be used as a forwarding engine. In our implementation, it utilizes OpenFlow enabled switches [11] far this purpose. However, the switch control according to the present invention is not limited to OpenFlow.

Communication channel: By delegating the control path to a separate box, one has to ensure that the communication channel between the switch controller and the box has sufficient capacity and does not introduce undue delay. It shows that neither is a problem with current technology, see section of feasibility.

Forwarding: While switches in principle are able to forward IP packets, layer-2 switching differs from layer-3 switching. We show that the capabilities of the switch, namely the TCAMs coupled with a slow path via the commodity PC suffices to handle full IP routing tables and the traffic requirements within a carrier aggregation network, see Section 6. This is possible since Internet traffic is consistent with Zipf-like distributions such as described in [12] to [15].

Feature set: While routers offer many more features than switches the capabilities of the proposed low cost high performance router often suffice, e.g., in a carrier aggregation network, see the discussion later on. For example, while routers offer extensive support for QoS today, ISPs rarely use the full capabilities. Moreover, it is possible to extend the capabilities of switches. For example, Ericsson Research has already announced an experimental project for adding MPLS support for OpenFlow enabled switches.

Buffering: Switches often offer significantly less buffering than routers. However, smaller buffers may be sufficed for carrying out the routing function.

Attacks: In principle, it may be possible that an attacker can try to attack the supposed weak link, i.e. the communication channel. Therefore, the section of attacks against proactive FIBPredict the handling of DoS attacks.

The preferred advantage of the present invention is that a) separating the development cycle for hardware based forwarding and control software, b) gaining flexibility as routers are increasingly expected to do more than route packets, c) having a low cost high performance alternative to traditional routers such as those by Juniper and Cisco, especially as switches are becoming commodity.

Hardware architectures

This section will briefly review router and switch architectures to highlight some of the differences, see the Table for a summary. Moreover, a brief review of routing protocols and traffic demands is provided. The internet is divided into a collection of autonomous systems, ASs. Routing through the Internet depends on protocols for routing between ASs, and protocols for routing within individual ASs. Each AS is managed by an ISP, who operates a network of IP routers that connects customers and other service providers.

IP networks run on top of an underlying facility network which may utilize multiple kinds of technologies, e.g.,

packet over SONET, FDDI, ATM, and Ethernet. However, Ethernet is becoming the technology of choice as it is offering a low cost alternative.

*Router architecture*

Each router terminates a mixture of access, peering, and backbone links. Routers perform several tasks among which: i) computing the routing table for each routing protocol, ii) computing a forwarding table based on the routing tables, iii) forwarding packets, iv) managing network interfaces using different technologies, v) managing access to network resources through access control lists, ACL. The tasks i) and ii) are done in software on the route processor, see Fig. 2 and section describing the router protocols for more details. The tasks iii), iv) and v) are typically done in hardware on the line cards in high end routers.

Several architectures are possible to build a router. The first generation of routers were very similar to a conventional PC. A shared BUS or shared memory is used to interconnect the network interface cards, NIC and most operations on the packets are handled by the main CPU.

However, the required throughput between NICs soon exceeded the available capacity. Therefore, the next generation of routers relies on line cards which augment the capabilities of NICs by increasing their processing power, adding a partial that is a route cache, and or a full copy of the routing table, as well as input and receive buffers. This architecture is closer to Fig. 2, but still relies on a BUS or shared memory to move packets across network interfaces.

Replacing the data bus with a switching fabric enables terabit routers, see Fig. 2. The switching fabric enables line cards to exchange packets among each other in a very high speed without involving the main CPU, i.e. the route control logic. Almost all high-end commercial routers, including those of Cisco and Juniper, rely on such architecture. The switching fabric is the "fast path" of a router and the CPU is the "slow path" which is only used for handling non-standard packets and control packets.

Line cards on IP routers are therefore optimized to minimize the number of packets that have to be forwarded through the slow path. Given current line rates high-end line cards have to utilize fast memory flavours, e.g., SRAM, RLDRAM, or TCAM, as well as specialized ASIC, thus increasing their price tag.

*Routing protocols*

The conventional routers have to support many routing protocols including BGP, IS-IS, OSPF, MPLS, and IP multicast. Each routing protocol maintains a routing table that contains the best route to each neighbour, called routing information base, RIB, based on the information it receives from its neighbours. Information from these RIBs is combined to build a forwarding table, the forwarding information base, FIB. The FIB lists far each destination prefix the output part to which the packet has to be sent and is maintained by the route controller. Often full copies of the FIB are distributed to the line cards.

A full RIB for BGP typically contains more than 300,000 entries, as BGP is used to ensure Internet wide reachability. The OSPF/IS-IS RIBs typically contain only entries for the routers within the AS. As such their RIBs are smaller. Nevertheless, the resulting FIB contains more than 300,000 entries. This number is expected to further increase as the Internet is still growing and IPv6 is starting to be used, giving rise to two different kinds of concerns: a) FIB size, as the line cards need to have sufficient memory to maintain a full copy of the FIB; b) routing dynamics, as updates need to be pushed to the line cards.

Given that BGP prefixes are typically globally visible in the Internet, any change or update as well as any link failure can lead to routing updates. Currently the number of routing updates roughly corresponds to a few updates per second with peak rates of up to a few thousands. However, every update might require the re-computation of the routing table and a modification of some of the FIB entries of each line card. Therefore, it is important to have enough resources for routing in order to not disrupt forwarding.

*Switch architecture*

While switches and routers are conceptually quite similar, i.e. they both forward packets and contain fast switching fabrics. However, they differ in their concepts: switches are layer-2 devices while routers are layer-3. This implies that from a software perspective switches are simpler as no support for routing is needed, e.g., BOP, IS-IS, OSPF, and MPLS. However, they have to support spanning tree. While routers support a huge range of other technologies switches only support Ethernet. Yet, note that Ethernet is becoming the technology of choice even for wide-area interconnection due to its price performance benefits.

Contrary to routers, layer-2 switches do not need huge FIBs nor do they need to support longest prefix match. Their lookup is based on the fixed size layer-2 address, the MAC address. However, switches also have to handle much dynamics of their forwarding tables due to the growth of layer-2 islands and the increased popularity of mobile devices, not mentioning requirements in sub-millisecond spanning tree convergence times as well as resilience to attacks.

The carrier grade layer-2 switches offer some layer-3 capabilities, e.g., ACLs, traffic shaping, and even some routing. They are utilizing TCAMs for this purpose which is a technology also used in router line cards, e.g., for the purpose of ACLs. As such, the capabilities of a layer-3 switch are in principle getting closer to those of routers. However, the current size of a switch TCAM is usually at most a few thousands of entries while high-end router line cards have to be capable of doing longest prefix matching on 300,000 entries at line rate. Note, that the number of deployed switches is significantly larger than the number of routers. The development of special purpose switch ASICs with TCAMs can be amortized across a much larger hardware base than those of router ASICs, potentially driving significant reductions in TCAM costs.

*ISP networks and traffic*

The ISP networks include a collection of IP routers and bidirectional layer-3 links. The customers are typically connected to an edge router. The traffic by such edge routers is then aggregated via an aggregation network which sometimes comprises multiple routers. These are then connected to a backbone router which is part of the core network. A reoccurring property of internet traffic at various levels of aggregation is its consistency with Zipfs law. In particular, the amount of traffic per destination prefix is consistent with a Zipf distribution. This implies that a small fraction of the destination prefixes is responsible for most of the traffic. This is the observation utilized by route caches and that we also take advantage of. However, which prefixes are popular at any given time can and does change. This implies that we have to address the question of how to predict which prefixes are going to be popular and change the FIB entries accordingly. *Implementation examples according to the present invention*

The example of router prototype builds upon the idea of combining open source routing software on commodity PC hardware with an Ethernet switch for high-performance packet forwarding. Fig. 2 shows an exemplary implementation of the system. As mentioned in the introductory part of the present invention, the main tasks of the routers are i) to compute the routing table, ii) to perform the longest prefix match at line rate, and iii) to provide up to multiple terabit throughput. With router prototype the tasks of the switch are fast path forwarding and physically interconnecting with other routers. The tasks of the PC are the ones of the route controller as well as slow path forwarding. As such, it ensures the logical interconnection with the other routers. Accordingly, two different communication channels between the switch and the PC are provided: one for control traffic and one for slow path forwarding. Note that these two tasks can be done on the same machine or distributed across multiple ones. The route controller which currently runs on the PC might also run directly on the switch. In effect, the design decouples the control plane from the forwarding engine contrary to conventional router architectures. As a consequence, to the outside Router prototype is a single box and the presence of the PC is not visible to the other routers.

In other word, the switch provides hardware accelerated forwarding path as well as a higher port density as compared to PCs. This fast path is used as a forwarding engine for most of the traffic. The PC serves not only as a route controller, but it also monitors the traffic and maintains a communication channel with the switch to populate its FIB with the most popular destination prefixes. In addition, it provides a slow path to forward the remaining traffic not handled by the switch. In Sections 5 and 6 we show, that given current hardware and software, the router prototype can in principle handle the traffic volume of a carrier aggregation network.

Instead of changing any of the available open source routing distributions, the exemplary implantation of the present invention uses any software as a route controller. To archive this, a switch controller is implemented. The switch controller acts as a routing proxy, called route visor, to relay the control traffic from the switch to the router and provide the route controller with virtual interfaces that correspond to the physical switch interfaces (e.g., vAl to vAn). Each virtual interface is a sibling of a switch port and has the same layer-2 MAC address as the corresponding physical interface on the switch. The only difference is that the virtual interfaces represent router ports and therefore need IP addresses, i.e. router ports, layer 3 while the physical ones do not, i.e. switch ports, layer 2. Thus any adjacent router connected to Al to An can establish, e.g., a BGP peering session with the route controller. To the outside world, the switch-PC combination acts as if it was a conventional IP router.

Moreover, route visor ensures that all packets that have to be handled by the route controller, including routing updates and ARP messages, are forwarded to the PC. In addition, the route visor monitors if the route controller has any new FIB entries to install. If so it examines them and may decide to update the FIB entries on the switch, i.e. the fast path). Another task of route visor is to collect statistics from the PC FIB as well as the Switch FIB and to optimize the use of the fast path.

In addition, the route visor needs to decide for a set of prefixes to be installed into the switch FIB. For that, it collects traffic statistics from both the slow path and the fast path. A smart prefix selection strategy implemented within the route visor then uses these statistics to periodically compose a selection f prefixes which are expected to contribute most of the traffic. The route visor may monitor if changes to the FIB on the PC require a modification of the switch FIB. For example, the removal of a prefix in consequence of an incoming BGP withdrawal should immediately be propagated to the witch. Also, the route visor should be able to detect malicious activity and provide countermeasures against attacks.

With regards to the necessary throughput and delay requirements, it is noted that on the CPUs within the conventional router the routing controllers are typically less capable than current PC CPUs. Moreover, the conventional router may interconnect its routing controllers via Ethernet interfaces. Whether the additional delay introduced by going outside the switch is a significant impairment is discussed in section of proactive FIBpredict.

In general, in the system according to present invention the most of the traffic is forwarded by the switch. The system and the method according to the present invention benefit from the destination lookup performance of line cards in current switches as well as the high throughput achieved by switching fabrics. Given that it is desired to rely on commodity switches that have only limited FIB memory, not all FIB entries that the current router keeps into the switch can be installed.

In order to achieve high-performance packet forwarding, the present invention takes the advantage of the switches hardware capabilities. In particular, using the TCAMs to perform longest prefix matching and the switch fabric may satisfy the throughput requirements. However, the sizes of the TCAMs in current switches do not enable us to install all FIB entries in the TCAM. As such, the TCAMs can be only used as accelerators. In effect the switch is the fast path and a slow path is realized via the PC, see Fig. 3. If a packet, e.g., *pkt1* in Fig. 3, is forwarded using the fast path the relevant FIB entry is loaded into the TCAM of the appropriate switch line card by router visor. In this case the switch can handle the packet forwarding by itself.

If a packet, e.g.*, pkt2* in Fig. 3, cannot be forwarded using the fast path it will be directed towards the PC via a dedicated network interface. Upon receiving this packet the PC can use any forwarding software, e.g., in kernel routing software, to determine the appropriate exit interface on the switch. After rewriting the appropriate layer-2 header, the packet is sent back to the switch where it is then forwarded via the switching fabric to the appropriate network interface. The switch TCAMs are thus used as route caches. The full routing table is maintained within the PC.

Note, that the described example ensures not only consistent routing but also consistent delays. As long as the TCAM entries are not changed, packets for the same destination will either be handled on the slow path or on the fast path. Upon changing a TCAM entry some packet reordering is possible. However, this reordering is limited to a single TCP window as round trip times in the Internet are significantly larger than the time it takes to update a TCAM entry within the switch, see section about performance characteristics later.

However, the switch TCAM is much more flexible than a traditional route cache. In a traditional cache, upon a miss one has to install an entry so that the miss can be served. This is not the case in our design. Even packets that are not handled by TCAM entries directly are served. The only restriction is that the arrival rate of such packets should not be too high in order to not exceed the capabilities of our slow path. Therefore, the router prototype offers a wealth of new algorithmic opportunities to realize smart prefix selection strategies which maximize the number of packets handled by the fast path while minimizing the number of TCAM updates. Another difference is that we do not have to store the packets until the cache entry has been installed either.

A limitation of this approach is the slow path capacity. The prefix selection strategy of the route visor should make an effort to keep the probability low of overwhelming the slow path with traffic amounts above its capacity.

In order to realize forwarding and to receive all control packets the router visor may remotely control the switch. In particular, it is able to instantiate switch FIB entries and to gather statistics on those entries. There are switches that provide such an API. Notably, OpenFlow enabled switches and programmable switching equipment are, e.g. in [6]. The route visor according to the present invention may use the following OpenFlow commands:

- FLOW_MOD allows adding and removing individual FIB cache entries. If the command is unsuccessful, an error message is sent back to the controller.
- STATS_REQUEST requests statistics about FIB cache entries, including traffic counters in packets and bytes. A request can be tor a specific FIB cache entry, but also for an aggregate of entries, e.g. the whole FIB cache.
- STATS_REPLY responds to a STATS_REQUEST command.

With regards to the delay imposed by having to use the APIs of the programmable switch, the present invention discusses in section of performance characteristics later about the extra delay introduced before a routing update tasks effect into the switch FIB.

In summary, the above implementation example outlines how to build in principle a flexible router from using commodity PC hardware and a programmable packet switch. Still, the above example could have significant shortcomings some of which are already outlined above and in the introduction. The results of a prototype implementation and a traffic analysis later on will show that the system and the method according to the present invention are not only scalable but also resilient to attacks.

*Implementation*

The prototype system according to the present invention uses an OpenFlow switch, and the open source software Quagga. Fig. 3 shows the prototype implementation. The control plane and slow path are realized on a single conventional PC such as Sun Fire X4150 running Linux. The router visor is implemented on top of OpenFlow capable switches, e.g. NetFPGA, HP ProCurve Switch 5406z1, NEC IP8800/S3640, Quanta LB4G. For the prototype uses OpenFlow since its API enables remote control of switches as outlined above. With OpenFlow it can realize router visor as an OpenFlow controller. The Linux PC server serves as the control plane and operates the slow path. By choosing Quagga no source code modification nor library preloading is necessary, any other router software would work as well, e.g., XORP, or BIRD.

In order to make the OpenFlow switch to appear as a conventional router, all routing protocol messages sent to any of the switch ports should be forwarded to Quagga and vice versa. It supports this transparently through VLAN tagging, automatically configured by router visor. A dedicated Ethernet-based connection or virtual network connection between the s witch and the PC is used to transport routing protocol messages, e.g. BGP, OSPF, IS-IS, as well as the slow path traffic. The routing protocol messages as well as slow path traffic have per port VLAN tags in order to retain the information about the layer-2 interface at which they were received on the switch. This information is necessary for several routing protocols like OSPF, IS-IS and IP multicast. The Quagga operates on top of the Linux VLAN interfaces transparently as the Linux kernel takes care of adding and stripping the VLAN tags.

The router visor has multiple tasks. First, it maintains an OpenFlow protocol communication channel with the OpenFlow switch. Second, it automatically configures the VLANs based on the number of network interfaces on the switch. Those VLANs will be used to multiplex routing protocol messages and slow path traffic. Third, it starts Quagga and installs static flow table entries on the switch to match all IP packets that have as destination an IP address maintained on the PC and forward them to the PC. Currently, BGP, OSPF and ISIS are supported. Finally, the router visor acts as a ARP proxy for the switch network interfaces that point to IP addresses maintained on the PC. To the outside, the OpenFlow switch appears like a conventional IP router.

For slow path forwarding, the prototype uses the FIB of the Linux operation system. As such whenever Quagga changes the FIB of the Linux operating system it may want to also change the FIB entries on the switch. Therefore, the router visor passively monitors such changes by connecting to the routing table netlink subsystem provided by the Linux kernel. As soon as a FIB changes occurs, it can translate the modification into a FLOW_MOD OpenFlow protocol message.

As the switch FIB is likely unable to handle all Quagga FIB entries the router visor uses a prefix prediction strategy to select entries that account for a major fraction of the traffic. See section of proactive prediction later for a detailed discussion of the prediction algorithm.

The OpenFlow switches offer a high performance forwarding engine for those prefixes installed into the switch FIB. For non-matching packets, a static catch-all rule is used to forward them via a dedicated interface to a dedicated interface on the Linux host. The Linux host, which has the full FIB, in turn adds a VLAN tag corresponding to the desired output interface and sends it back to the switch. The switch, knowing where to forward a packet with a given VLAN tag, pulls the VLAN tag off the packet and forwards it to the appropriate interface. An alternative design allows the system according to the present invention to forward all traffic from the slow path to another router which maintains a full routing table.

In summary, the OpenFlow switches differentiate between wild-carded and exact-match FIB entries and typically support different amounts of either type of entry. For the router prototype, the present invention relies on wild-carded entries for IP prefixes. Today, for example the HP ProCurve 5406z1 supports 2000 wild-carded entries. However, the FIB size of the OpenFlow switches is expected to increase as hardware and firmware development advances. The present invention outlines how to build a flexible router using commodity PC hardware and a programmable switch. The router prototype can improve the performance of PC based software routers significantly. Hereinafter, the present invention provides results from the prototype implementation and the traffic analysis to show that the system and method according to the present invention are scalable: it can in principle handle traffic volumes as seen by a carrier aggregation router.

*Prototype evaluation*

In this section the present invention uses the prototype implementation to show that it is capable to interoperate with Juniper and Cisco routers in a multiprotocol setup. Moreover, the present invention uses it to derive some performance characteristics regarding FIB update delays and rates. The latter are necessary for the design of smart FIB update strategies.

In order to highlight that the prototype implementation is indeed a router, some results from integrating it into a network will be shown. The network comprises a Juniper router J4350, a Cisco router C2691, and an open source router running on a Linux PC. The four routers are the backbone of an ISP using OSPF for its internal routing. The interconnections to external ASs are realized via BGP peering sessions to two of the routers: one to our prototype and one to the Juniper router. These are realized with a tool, BGPreplay [16], that is able to re-inject BGP messages recorded by any of the publicly available BGP monitors, e.g., RIS or route views. How long it takes for a routing update to take effect in the PC is now investigated. For this purpose, individual BGP updates are sent from a router to the PC using BGPreplay and measure the time between the BGP update is received at the PC using libpcap and the time the corresponding route is installed in the Linux keme1. The average time for a BGP update to take effect is between 65 and 100ms, with an average of 76ms. The present invention shows below the time for this route to be installed in the switch FIB.

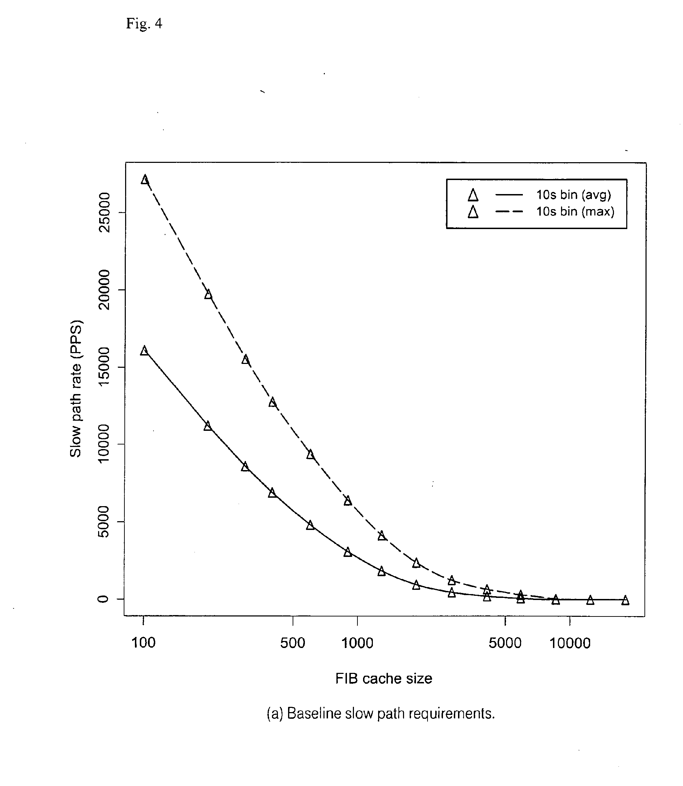

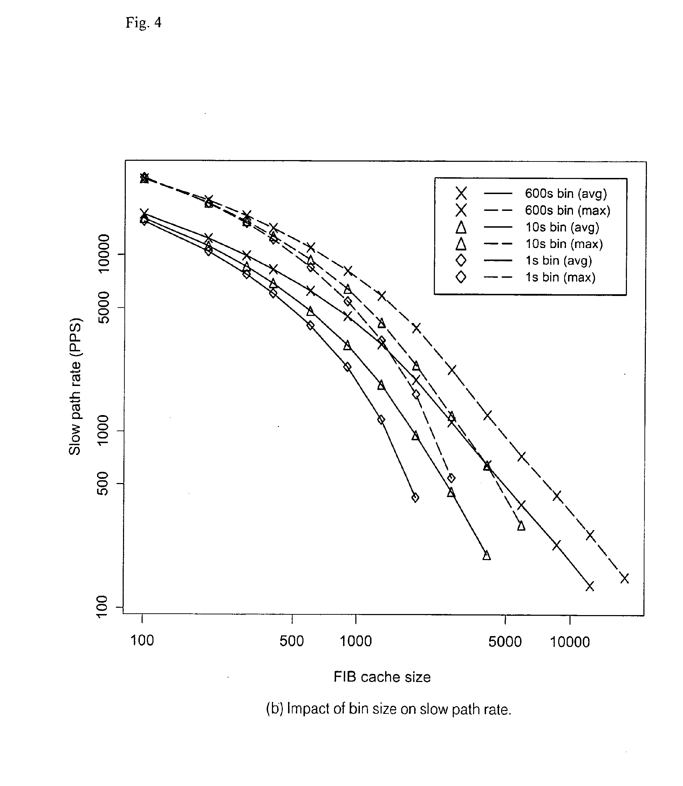

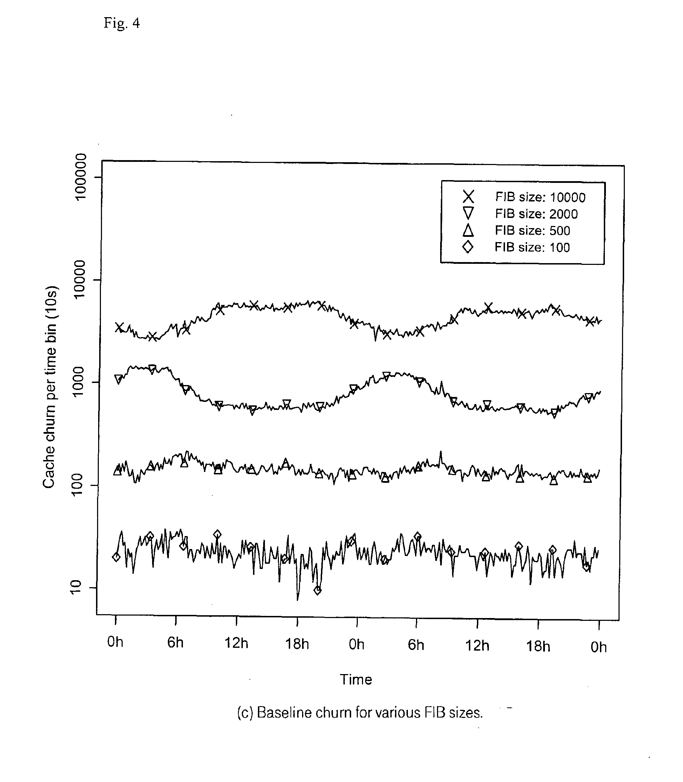

To realize the virtual sibling ports which are necessary to support Quagga's operation and the slow path, the route visor automatically configures a VLAN trunk as shown on Fig. 4. This VLAN trunk is used to multiplex routing protocol messages as well as slow path traffic from the PC to the switch and vice versa. Quagga can operate on top of Linux VLAN interfaces transparently, as the Linux kernel takes care of adding and stripping off VLAN tags as packets pass through.

It is explored how much traffic our slow path can handle by pushing as much traffic as possible for a given packet size. It was found that with packet sizes of 500, 1000, and 1500 bytes we can fill the link capacity of 1 Gbps almost entirely. The achieved packet rate per second is in the order of 80k for 1500 bytes packets to 530k for 60 bytes packets.

*Performance characteristics*

In order to understand the performance limits of current switches, the capabilities of the router prototype regarding the performance characterises of the communication channel is examined. These results are going to be the basis for our scalability and feasibility analysis of The router prototype. *FIB size.* Most existing switches have TCAMs of varying sizes. These TCAMs are used for different purposes, e.g. ACLs, layer-2 switching, and longest prefix matching. At least 1000 entries can be used on the NetFPGA, Cisco catalyst, and the HP ProCurve switches. Some switches limit the number of TCAM entries that can be used for longest prefix match, e.g. 256, the rest being dedicated to other operations. High-end switches already have larger TCAMs that can accommodate at least 32,000 entries.

*FIB update delay:* the additional delay taken for a change in the PC FIB is measured, e.g. after a BGP update took place, to take effect in the TCAM of a HP ProCurve Switch 5406z1. Immediately after a change in the FIB of the PC, the OpenFlow FLOW_MOD commands are generated in order to modify an entry of the TCAM of the switch. It is to be noted that there is a strict linear relationship between the number of TCAM entries to be modified on the switch and the delay between the time to be issued by the OpenFlow commands on the PC and the time the TCAM of the switch is modified. It takes from 0.8 to 1ms to modify a single FIB entry.

*FIB update rate:* the most important limitation when issuing a large number of FIB updates is the rate at which the switch controller can receive and process the FIB update commands coming from the PC. The network bandwidth is not a limitation given the number of FIB updates per second it needs, cf. the section describing the FIB management strategy later. Given the measured FIB update delay, the switch controller can handle at least a thousand FIB updates per second.

*Traffic statistics:* any strategy for FIBPredict that is smarter than typical caching strategies such as LRU or LFU should take advantage of traffic statistics. Accordingly, is now discusses the capabilities of the prototype system for both the fast as well as the slow path.

Almost all switches support standard SNMP MIBs which include per interfaces traffic summaries. However, their granularity is typically limited. Most switches included OpenFlow enabled one offer per TCAM entry statistics. With OpenF10w these can be queried via the STATS_REQUEST command. Similar statistics are offered by the Linux kernel forwarding implementation. On Linux the query is just a system call. As such there is not a huge limit regarding the frequency at which the information can be gathered. One of the tasks of the router visor is to check changes to the Linux kernel routing table. In order to evaluate at which granularity, the prototype system can gather the statistics from the switch which is setup for an experiment where the OpenFlow controller of the switch is queried by sending STATS REQUEST command to obtain the traffic statistics of all existing TCAM entries. A single command is therefore issued, but the number of entries present in the TCAM is varied by adding the required number of entries through the FLOW_ MOD command. The delay d to obtain statistics about *n* entries follows approximately a linear relationship: $d \cong 1.2ms + n \times 0.01ms$. For a FIB size of 1000 entries, it takes about 11.2s. This time is negligible compared to the time granularity at which FIBPredict works.

An alternative approach for gathering traffic statistics is to rely on flow-level statistics such as NetFlow [17] or IPFIX [18]. However, gathering flow-level statistics imposes a burden on the router CPU and as such most high-performance routers only support NetFlow for sampled traffic. A similar feature can easily be added to the prototype using sFlow [19].

*Feasibility*

In this section, the present inventions shows that the capacities of the communication channel as well as the capacity of the slow path are sufficient to handle the traffic demands within a carrier aggregation network. In particular, it is examined that how the capacity of the communication channel and of the slow path depend on the TCAM size of the switch, i.e., the fast path.

The exemplary prototype is based on anonymized packet-level observations of residential DSL connections collected at aggregation points within a large European ISP. Our monitor, using Endace monitoring cards, allows us to observe the traffic of more than 20,000 DSL line& to the Internet. The data anonymization is performed immediately on the secured measurement infrastructure.

An anonymized 48 hour packet trace collected in August 2009 is used. While no packet loss has been experienced, there are several multi-second periods, i.e. less than 5 minutes overall per packet trace, with no packets due to OS/file-system interactions. The routing decision for this kind of dataset is trivial for the direction towards the customers but challenging with regards to prefix variability for the outgoing direction. Accordingly, the incoming and outgoing traffic are distinguished, the latter is referred to as TROUT. Moreover, the TROUT is sub-sampled based on IP address to explore how the approach scales. For this purpose, a base subsample TRBASE of TROUT is used, which contains the traffic of 20,000 random IP addresses.

With regards to the application mix, HTTP, NNTP, BitTorrent, and eDonkey each contribute a significant amount of traffic. Moreover, their total traffic adds up to more than 72% of the overall traffic at the vantage point. Similar protocol distributions have been observed at different times and at other locations of the same ISP.

To evaluate if the capacity of the slow path is sufficient to handle the traffic demands imposed by, e.g., 20,000 DSL lines, a simulator is used which takes the trace as input and estimates the FIB hits and misses. In other words, the simulator calculates the number of packets that are handled on the fast path and on the slow path. This simulator is later used to experiment with the various FIB prediction strategies. Given that the popularity of prefixes is consistent with a Zipf-like distribution we expect that a significant fraction of the overall traffic can be handled by even a small number of FIB entries.

For the moment it can be presumed that the FIB can be updated every 10 seconds. To get a lower bound for the number of FIB misses it is assumed that FIB updates are instantaneous and assume perfect future knowledge of the traffic. This prediction strategy may be called the optimal one. Therefore, the $x$ FIB entries may be updated at the start of each 10 second time slot with the $x$ top-ranked prefixes. Fig. 4a shows the impact of increasing the FIB size on the capacity requirements of the slow path on a log-linear scale. Fig. 4b includes the same data on a log-log scale.

With only 500 FIB entries the average rate of packets per second that the slow path has to handle is 5700, compared to 38, 100 for the fast path. If we consider the worst case, the required packet forwarding rate does less than double, with about 10,800 packets per second. This is about 32% of the fast path rate. With 1,000 FIB entries, a very modest size for future switch TCAMs, the average required packet for warding rate on the slow path is 1962, with a maximum of 4700, only 11 % of the fast path capacity. When the FIB sizes even further are increased, the requirements on the slow path reduce even more. In addition, it uses some sampled NetFlow data from the same ISP as well as other non-commercial ISPs and observed similar behaviours.

As a thought experiment the above results are used to scale the traffic up to 10 Gbps, ignoring aggregation gains discussed below. In this case a FIB of a few thousand entries is still enough to keep slow path rate to less than a few thousands of packets per second. The previous work has shown that such rates can be easily handled on commodity PC hardware and the communication requirements between the switch and the PC are still well below 1 Gbps.

It is to be noted that the slow path rate also corresponds to the capacity requirements of the communication channel between the switch and the PC. On average it is less than 4 Mbps and its maximum is 10 Mbps. These results do not change significantly. See Figure 4b, if the bin size is increased to 60 seconds or 600 seconds or if the bit size is decreased to 1 second. However, the requirements for the slow path increase as the time bins increase. This shows that there are some prefixes that are only popular for a limited time period.

As a thought experiment the above results are now used to scale the traffic up to 10 Gbps, ignoring aggregation gains. In this case a TCAM of a few thousand entries is still enough to keep slow path rate to less than a few thousands of packets per second. Previous work has shown that such rates can be easily handled on commodity PC hardware [11] and the communication requirements are still well less than 1 Gbps.

Another component that is adding overhead to the communication channel is the FIB update rate that is to be maintained in order to achieve such positive balance between slow vs. fast path forwarding. For this purpose Fig. 4c shows the total number of FIB cache modifications, additions and removals, required per time bin for 10 second bins on a log scale for different FIB sizes. With only a small number of FIB entries the chum is relatively small. As the number of FIB entries increases the chum increases as well. This is partly due to the fact that a small difference in traffic can cause a larger shift in rank for the lower ranked prefixes than the top ranked prefixes.

Also note, that there is an inverse behaviour regarding time of day for medium sized FIBs and large FIB sizes.

When the FIB is large enough to include prefixes that have limited traffic volume, yet is still too small to include all prefixes, e.g. the FIB size 2,000 in Fig. 4c, the chum is higher during the times of the day when the total traffic volume is lower. This is explained by the higher stability of the heavy hitters during peak times. As soon as the FIB cache size exceeds the total number of prefixes that are seen during any time bin (FIB sizes of 2, 000 and 10,000 in Fig. 4c), the chum simply follows the time of day pattern. As the total traffic volume increase during peak times, the number of prefixes that have traffic also increase while most of these prefixes have traffic for only very limited periods of time.

So far it is presumed that the slow path requirement increases linearly with the traffic volume. However, this extrapolation ignores that it is likely that there is a strong correlation among the top prefixes from multiple different sources. To get an idea of the aggregation gains, the trace is sub-sampled by IP address. The starting point for this experiments the TRBASE-traffic generated by 20,000 randomly selected IP addresses. From these 10,000 IP addresses are selected and then repeated the sub-sampling until 1,250 IPs left. For each one of these data sets the average and maximum number of packets per second calculated that the slow path would have to handle as a function of the FIB size.

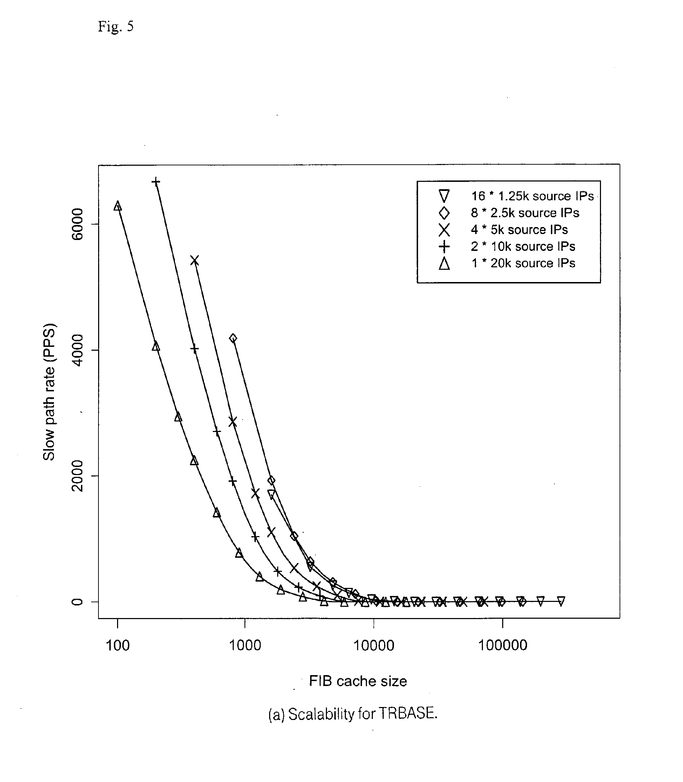

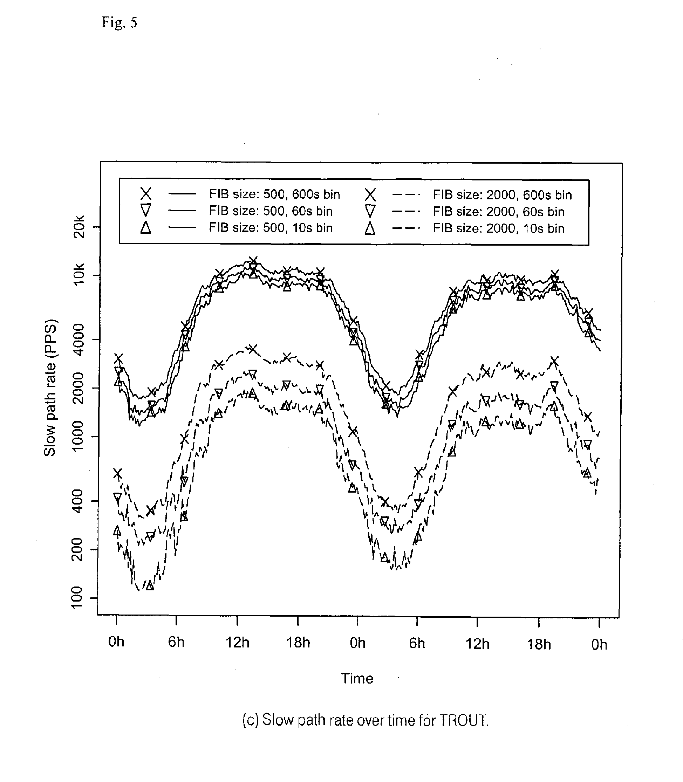

To be able to compare the results the sampling is inverted by multiplying the FIB size as well as the number of packets per second with the sampling factor, see Figure 5a. In effect it is using the same though experiment from above but with the subsamples as the baseline. If it would have no aggregation gain all curves should visually overlap. However, this is not the case. The rescaled results from the subsamples are shifted to the right. This means that on the basis of the subsample it would have predicted much higher resource demands than are actually necessary. Therefore, it is concluded that there are significant aggregation gains and that the approach is scalable. Indeed, handling the demands within an ISPs aggregation network of multiple 100,000 of customers should be easily possible.

So far it is presumed having perfect knowledge about the future traffic. However, this is unrealistic and it is known that although traffic popularity is consistent with a Zipf-like distribution far any time bin the composition does change. Therefore the router prototype has to predict which prefixes will be popular and that it may make mistakes and miss some prefixes. To understand the impact of such misses, the attention is draw to that how the FIB miss rate increases as one misses more and more of the most important or popular prefixes.

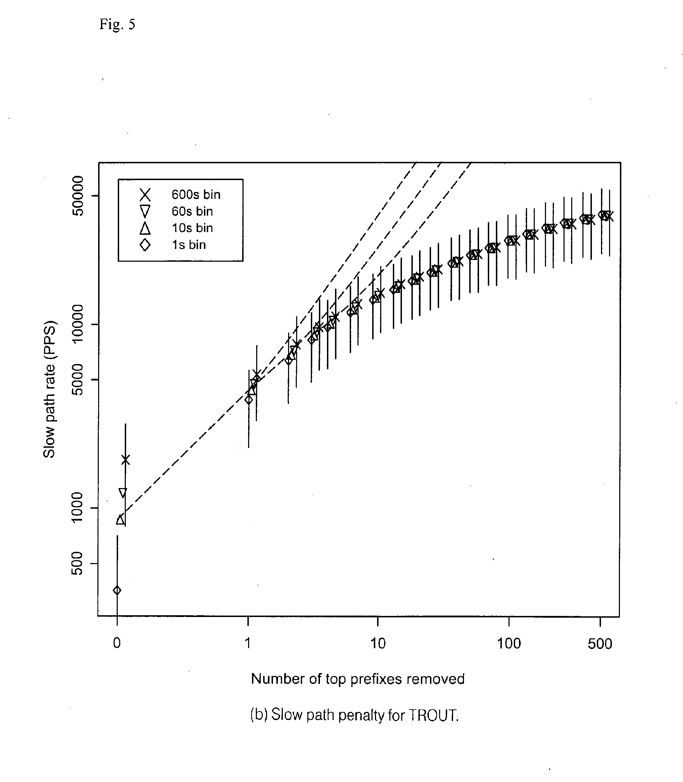

Fig. 5b shows the number of packets per second far the slow path if the top $x$ prefixes in terms of traffic volume are not included in the FIB with 2,000 entries. The value for 0 corresponds to the number of slow path packets without misprediction.

When the most popular prefix is not included the penalty is on average 3500 or 3000 packets per second. When the two top prefixes are missed the penalty is 6000. However, the increase in penalty is sub-linear. Support lines are added to highlight this sub-linearity on the log-log scale. This implies hat if one misses one of the lower ranked prefixes the penalty is not that significant. This means FIBPredict should focus on the most popular prefix. Fig. 5b also includes the maximum and the standard deviation. Not unsurprisingly, they depend on the time of day, i.e. with an increase in the morning and a decrease at late in the evening. Moreover, the plot also shows the results for all four considered time bin sizes: 1, 10, 60, 600 seconds. Note that the results do not differ much. However, the composition of the prefixes does change. This provides the hint that any good prediction strategy should be based upon both short term popularity as well as long term popularity.

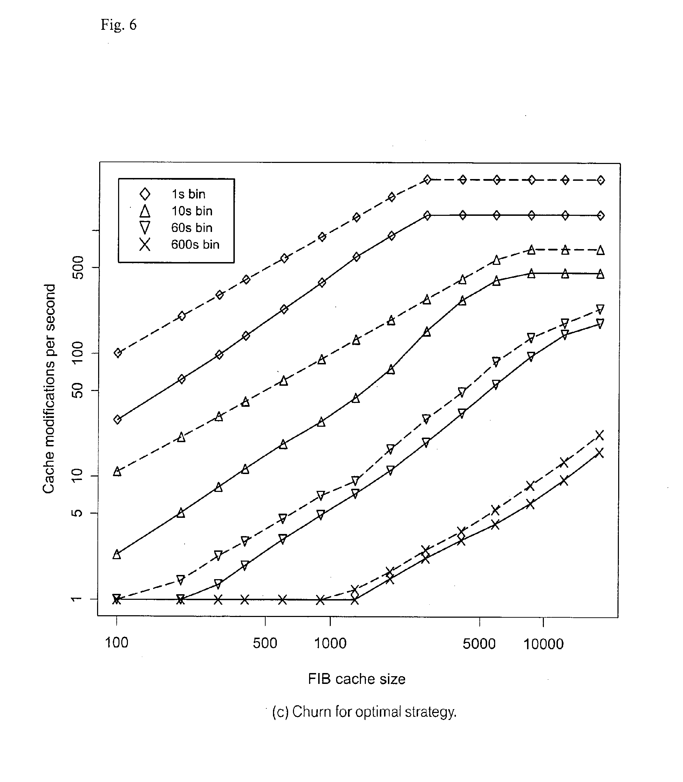

However, Fig. 5b shows that there is a difference in what time scale is considered regarding the penalty for the slow path. Indeed, this penalty increases as the FIB size increase. This is partly due to the fact that there is a strong overlap between prefixes that are among the top 100 prefixes for all considered time aggregations. However, the overlap is smaller among the 100-1,000 top most prefixes and even smaller among the 1,000-10,000 top most prefixes. This is natural as a small local traffic spike can cause a prefix to be considered among the top 100 prefixes for 1 second bins but only among the top 1,000 prefixes far 10 second bins and not even among the top 10,000 prefixes for 600 second bins. Fig. 6c shows how the slow path penalty is distributed across the two day period for a FIB size of 100 and 200 entries. It is noted that the penalty is strongly correlated with the overall traffic volume. There are drops during the nights and a lesser drop during lunch hour.

*FIB management strategies*

So far it was presumed that FIB updates are instantaneous and it was presumed perfect future knowledge about the traffic. However, this is not the case. Moreover, Internet traffic varies over time [8], as does the set of most popular prefixes seen on a given link. This section will derive smart prefix selection strategies, called FIBPredict, which maximize the number of packets handled by the fast path while minimizing the number of TCAM updates. However, before turning to the proposed strategies, how well traditional reactive caching approaches perform is to be examined.

Typical caching techniques are reactive: when a cache miss occurs the corresponding object is fetched and then placed into the cache. The central difference among reactive caching techniques is which existing cache entry to remove. Accordingly, every cache miss leads to a cache modification. The problem of the present invention differs in that not all cache misses have to be resolved by a cache modification. Two common caching strategies are least recently used, LRU and least frequently used, LFU. According to the present invention, they are implemented based on the assumption that cache replacement is instantaneous.

Fig. 4 shows the resulting cache misses which correspond to the slow path requirements and the FIB update rates. The lower bound estimates based on xxx second bins are also included. It is noted that LRU outperforms LFU which is consistent with conventional route caching. However, note that even LRU is still far away from the lower bound according to the present invention. This implies that there are significant potential far improvements. Moreover, the FIB update rates are extreme and based on the results from the previous section of performance characteristics not realizable. Indeed, it is known that high chum rates of common cache replacement strategies can be problematic. Accordingly, the caching method usually proposes to reduce chum by prioritizing both the most recent entries as well as the most stable ones over some limited time window. The present invention also takes advantage of such approaches.

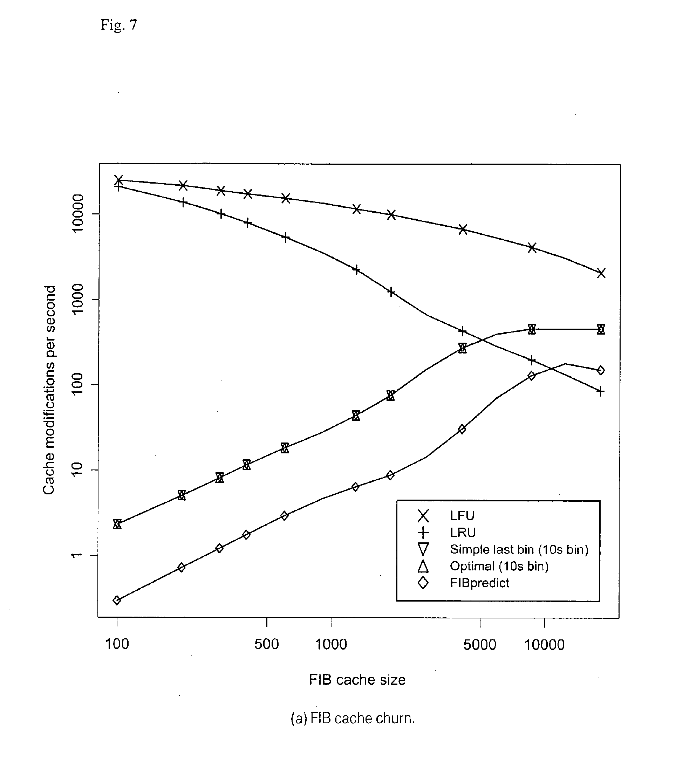

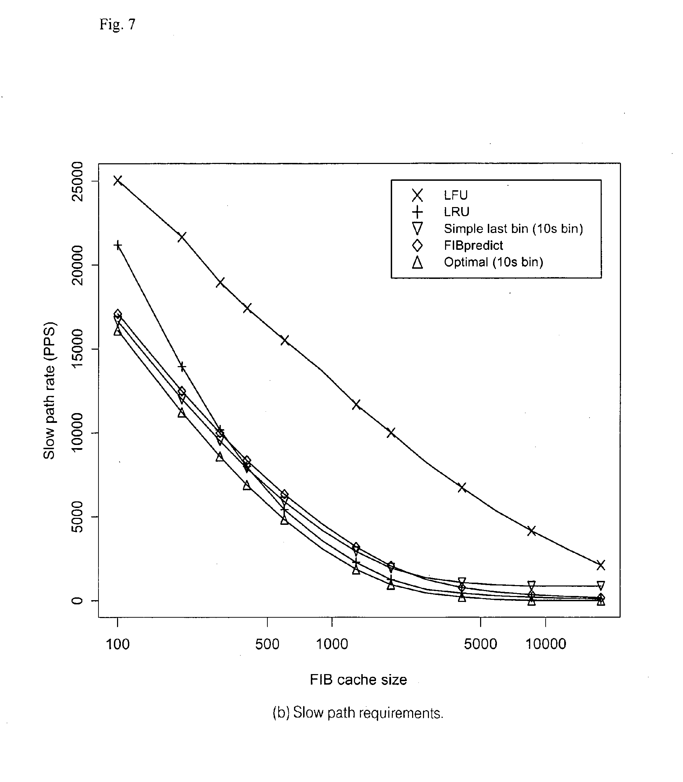

The lines for LRU and LFU in Figure 7a show the FIB cache update rates vs. FIB size. It is to be noted that LRU outperforms LFU which is consistent with previous work on route caching. The graph also shows the results for the optimal strategy based on 10 second bins. The churn of both LRU and LFU are substantial. Indeed, based on the results from section of performance characteristics, they are presumably not realizable. Moreover, they are several orders of magnitude higher than the churn of optimal for reasonable sized FIBs. Only for large FIB sizes LRU becomes comparable. However, the slow path requirements of optimal cannot be improved. Fig. 7b shows the slow path requirements for optimal, LRU, and LFU. Note, that for LRU and LFU the cache update rate is a lower bound for the slow path requirements.[1] The difference between Figs. 7a and 7b is that the first uses log-log scale while the second uses log-linear scale. It is proposed to reduce chum by prioritizing both the most recent entries as well as the most stable ones over some limited time window. Our proposed strategy follows the same principle.

Now the traffic workload analysis for FIBPredict is to be discussed. The selection of the FIB entries are performed not only based on cache misses but also on the whole set of potential destinations based on history of past behaviour. Hereby, the goal has to be to predict the most popular prefixes while not changing too many entries. To explore the tradeoffs between reacting to popularity changes while minimizing changes we not re-examine the workload.

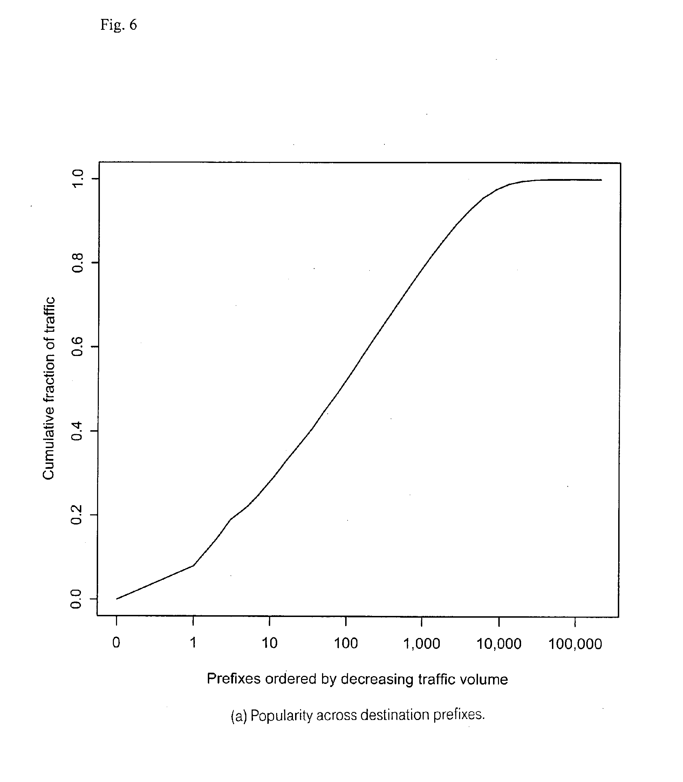

The fact that current internet traffic the popularity of destinations is consistent with the Zipf-like distribution is the key observation, see Fig. 6a. However, by itself it is not sufficient since if the popular prefixes change to quickly from one time bin to the next prediction becomes difficult and the churn might be prohibitive.

From Fig. 4c it is clear that relatively small time scales should be considered. However, the chum may be increased. The simplest and most straightforward approach for selecting FIB cache entries is to concentrate on the most promising prefixes in terms recent popularity. For example, one may choose the top-N prefixes in terms of traffic volume from the last time bin.

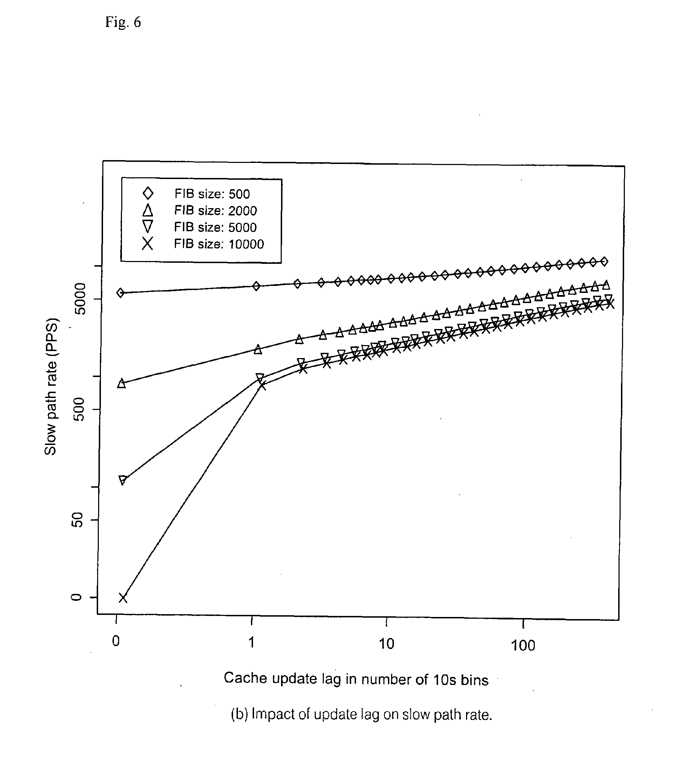

However, given that the traffic statistic collections as well as the FIB updates are not instantaneous some time may evolve. The impact of the time lag on the slow path is to be examined, see Fig. 6b for 10 second time bins. First, not knowing the traffic has a penalty. For a FIB size of 500 the cache misses per second vary between 5700 and 12,000. For a FIB size of 2000 they vary from 870 to 2700. However, the changes are not quite that drastic afterwards. Indeed, we almost observe a linear relationship for time lag values larger than 5. This weak dependency between time lag and miss rate implies that the delay on the communication channel between the switch and the route controller is unlikely to cause any problems.

However, FIB chum may become a burden once the FIB size grows to a few thousands of prefixes. Recall, Fig. 4c shows the total number of FIB cache modifications required per time bin. This rate is the same independent of what the lag between the traffic statistics collection and the FIB modifications is. When the FIB size is small, e.g., less than 500 entries, there is little churn. However, once the FIB cache increases to include prefixes that are not that do not correspond to significant traffic volumes, the churn increases significantly.

Fig. 6c shows how many FIB entries have to be changed on average and in the worst case for various FIB cache sizes and time bins. Note, that the top-N prefixes are very stable for larger bin durations. Even for FIB sizes of 5,000 entries the average chum is less than 5 and the maximum less than 10 FIB entries. However, for smaller bin durations they are much more variable leading to an almost complete overwrite of the FIB. Therefore, it is concluded that there is a trade off *between* using the recent history, i.e. short duration time bins in order to reduce slow path overhead, and the long term trends, i.e. long duration time bins in order to reduce the churn rates. The former would mean letting the natural variability of traffic control the content of the FIB cache. The latter means identifying the natural stability in popular destinations. Moreover, the latter is necessary in order to not be attackable by simple distributed denial of service attacks, DDoS. This trade off illustrate the difficulty of relying on simple FIB cache management techniques, e.g., LRU, LFU, or using recent summaries, and may explain why router vendors have been reluctant to rely on route caching, especially in the care of the internet. The natural variability of internet traffic makes FIB cache management non trivial.

Therefore, there is a need of effective proactive FIBPredict strategy. The design criteria for the proactive FIBPredict strategies are to keep most traffic on the fast path, to minimize chum, and to make it hard for an attacker to target the slow path. To keep most of the traffic on the fast path we rely on the observation that traffic is consistent with Zipfs law. To keep chum small, it is relied on long term trends based on traffic statistics, see the previous section about performance characteristic, which is gathered by both the switch as well as the slow path forwarder. To ensure flexibility and short reaction times, e.g., in case of traffic changes or DoS attacks, recently popular prefixes are also included. Accordingly, the present invention chooses to update which entries are in the FIB asynchronously to routing updates. However, routing updates that change the outgoing interfaces are applied immediately. Moreover, there is an exception mechanism in order to ensure fast reactions. This means that we are using a proactive

FIBPredict strategy in that we rely on keeping a memory of past behaviour and do not wait for cache misses to occur. Indeed, cache misses do not necessarily trigger FIB updates.

To gather the necessary statistics we propose to keep $2*B$ frequency values tor each prefix for $B$ different time granularities and both packet and byte counts. Possible time granularities are for example the bin sizes which were considered so far: 1, 10, 60, and 600 seconds. This implies that the traffic statistics are gathered every second and added to the 10 second bin. Once every 10 second this value is stored and added to the 60 second bin. Once every 60 second this value is stored and then added to the 600 second bin. By using some intelligent offsetting of the additions the overhead per time bin can be reduced.

From each statistics vector we select a set of $m$ top entries by number of packets respectively traffic volume. While one may naively expect that this results in $2*B*m$ entries this is not the case as the overlap between the popular prefixes is substantially. Indeed, it is typically seen that an overlap of more than 90% for the same frequency size and 50% for different frequencies. Therefore, if FIBPredict needs to select FIB entries for a FIB size of $N$ and keeps $2*B$ statistics the present invention proposes to choose $m = N/(B\ 1)$. Which for $N$ 500 and $B = 3$ corresponds to $m = 250$. The selected prefixes are then ranked by decreasing volume, i.e. traffic or packets and the top $m$ entries are selected if there are more than $m$ entries. If there are less than $m$ entries the FIB is augmented with the next most popular prefixes selected from the largest time bin, and if necessary the next most popular ones from the smaller time bins.

Next, in order to reduce chum the popularity of the currently used FIB entries is compared in reverse order with the popularity of the proposed replacements. Then, only those FIB entries are replaced for which the popularity of the new entry is at least twice as large as the one of the old FIB entry.

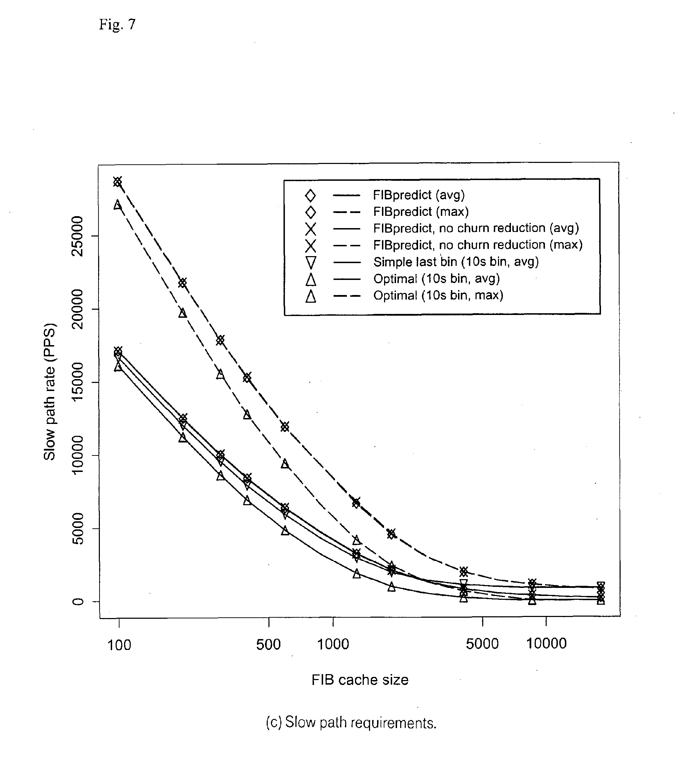

Fig. 7c shows the slow path requirements vs. the FIB size for our proposed FIBpredict strategy. FIBpredict performs slightly worse than the optimal strategy which has perfect knowledge of the future. It has similar performance as the simple strategy which relies on the information of the last bin. For larger FIB cache sizes FIBpredict even outperforms the last bin strategy. These observations hold for both the average as well as the maximum. It is not surprising that FIBpredict does not do much better than the last bin strategy as they both rely on similar information.

However, in terms of FIB chum, see Fig. 7a, FIBpredict outperforms not only the simple strategy but also the optimal one. The reason is that neither the simple strategy nor the optimal takes long-term trends into account. As such they are not geared towards optimizing the churn. Given the chum per time bin for FIBpredict and the results from the section of performance characteristics, it is concluded that the communication channel will not be a bottleneck for the router prototype.

Comparing FIBpredict with the results for LRU and LFU, see Figs. 7a and 7b, it shows that FIBpredict is significantly better than LFU on both metrics. Compared to LRU, FIBpredict wins in terms of churn and is only slightly worse than LRU regarding slow path requirements. However,as already pointed out, we underestimate the slow path requirements for LRU.

Given the chum per time bin that FIBPredict achieves, the load on the communication channel of the router prototype is clearly realizable. Even for FIB cache sizes larger than thousands of entries, the number of FIB updates is of a few hundreds per seconds. Given the performance evaluation from the previous section about performance characteristics, applying all updates would take a few hundreds of milliseconds.

It is to be noted that most vulnerable to attacks is the slow path and the communication channel. Let's start by considering possible attacks on the slow path. If an attacker wants to increase the load on the slow path he can do so by increasing the traffic to unpopular prefixes. His only constrain is that he has to ensure that the amount of traffic to any of the prefixes is below the amount of traffic to the least popular prefix in the FIB, i.e., that is handled by the fast path. Lets presume that the FIB contains $N$ prefixes and handles $T*x/100$ Gbps which corresponds to x% of overall traffic. Most likely $x$ is well larger than 90%. Moreover, the popularity of the least popular entry in the FIB is $PN$ which is much smaller than $T/(N*\ \alpha^N)$ where $\alpha$ is a parameter of the Zipf distribution. If the attacker wants to double the traffic on the slow path he has to add 10% extra traffic. For this he has two choices: either he distributes the traffic evenly among at least $T*0.1/\ _{PN}$ prefixes of volume less than $_{PN}$ or he distributes traffic consistent with Zipfs law to an even larger number of prefixes but in such a way that the largest contribution is less than $_{PN}$. Fortunately, the latter is very difficult as the traffic quantities become negligible very fast. The former is also not very practical, as it disturbs the standard Zipf like distribution and therefore this attack is easy to detect by the route visor.

If the attacker wants to attack the communication channel he has to add additional churn to the communication channel. One way to do this is to temporally increase the popularity of prefixes for the smallest considered time bins. While this is certainly possible for some time period the route visor can monitor the update rate and if it should notice that the effectiveness of popularity prediction of any of the frequency values decreases significantly it can eliminate those frequency values temporarily from the FIBPredict strategy. Thus that it is again robust against attacks. Moreover, if it should notice certain abnormal popularity shifts, the route visor may decide to redirect such traffic to an Network Intrusion Detection System for further analysis. Most likely it is possible to install a special FIB entry exactly for this purpose.

*Further aspects*

Further aspects of using a commodity switch as a router will be now discussed.

It is to be noted why are FIB caches not used in current routers. The fact is that the route caching was introduced on early Cisco routers, called fast switching, to speed up slow path CPU-based forwarding. Fast switching relies solely on time-outs for cache entry invalidation, not changes from the routing plane. Therefore, the timers used by fast switching must be small enough, i.e. typically a few seconds, to prevent inconsistencies between the route cache and the routing information. Using such small time-outs implies undesirably high chum in the cache under high traffic rates. High-end routers do not rely on a route caches on their line cards. Depending on the type of router, either a global FIB is used for all interfaces, or line cards store a copy of the full FIB. Keeping so many entries on the line cards is expensive, consumes a lot of power, which is definitely not cost-effective given that a significant fraction is unlikely to be matched by any packet on any given interface. Current high-end routers therefore waste much of their line card memory for not having to deal with an advanced management of FIB entries.

A lot of research has been done to find the "correct" size far router buffers. This section provides a brief review of the buffer sizing literature and shows that typical switch buffer sizes are in fact sufficient to act as care routers. By intuition, a buffer "is correctly sized" if, on the bottleneck link, it does not under-run, stalling the throughput. The first work [43] concluded that due to the dynamics of TCP, the buffers will not under-run if it is sized according to the product of the average RTT and the link's capacity:

$$B = \text{rtt} \times \text{bandwidth} \qquad (1)$$

However, the buffer can be reduced with statistical multiplexing. That is, as the number of TCP flows increases, the chance of under-running the buffer decreases. So, smaller buffers can be used - without significant efficiency loss - if there are sufficiently many long lived flows. Thus, the butter should also be sized by a function of n, the number of long-lived flows on the link:

$$B = \frac{\text{rtt} \times \text{bandwidth}}{\sqrt{n}} \qquad (2)$$

Solving far *n* produces the minimum number of flows needed to ensure that efficiency is maintained for a given buffer on a given link.

$$n = \left( \frac{\text{rtt} \times \text{bandwidth}}{B} \right)^2 \qquad (3)$$

Examining round-trip-times of packets in the traces shows an average rtt of 141.8ms. In terms of buffers available on actual switches, by example, a 10 GB/s HP ProCurve, switch line card has 36Mb buffer. Inputting these numbers into (3) shows that as long; as there are more than 1,626 flows, the butlers on this card are sufficient. In practice, the traces show that there are at least one order of magnitude more flows at any one time. Thus, there are enough flows to ensure that the buffers on commodity switches are actually sufficient sized.

The high-performance routers are as much about hardware than software. Carrier-grade routers based on open-source routing software exist on the market for quite a few years now. These products have or at least claim to have the same capabilities and performance as other well-known commercial products. They support all the necessary layer-3 features, e.g., BGP, OSPF, ISIS, MPLS, VPNs, IP multicast. The open-source software may not offer today all the necessary features, e.g., MPLS, VPNs or IP multicast. However, those prodcast prove that extending open-source routing software is possible and can be made carrier-grade. On the switch-side, several features can be expected from carrier-grade switches, including 802.1Q VLANs, trunking, rapid spanning tree protocol, IP multicast, QoS, L2 and L3VPNs. A recent comparison of data center switches showed that popular switch vendors have very different levels of support of layer-3 protocols while support layer-2 features consistently. This confirms the aspect of the present invention that current limited support of some features mostly reflects the state of the switch market rather than inherent limitations of the switches themselves.

Issues in the scalability of the existing routing architecture have led to several proposals to help at different levels. The art [21] suggests to change the inter-domain routing architecture to make it more scalable. Another way to scale routing is to increase the lifetime of existing routers, as proposed in [22]. Finally, scaling enterprise networks is also critical as large layer-2 networks suffer from significant problems. Flowroute according to the present invention differs from those architectural approaches in that we do not require any modification to the routing architecture. The present invention tries to make better use of the capabilities of existing network equipment. However, the lifetime of existing routers are not the target, but a new way to leverage the capabilities of cheap switches to transform them into routers is provided.

Making IP forwarding fast and scalable has been and still is one of the major problems of network equipment vendors. Early IP routers were performing forwarding in software. As the internet grew, routing tables were becoming large enough to require specialized data structures to limit the size of forwarding tables and allow efficient longest prefix matching at the same time. With growing traffic rates, software routers soon proved unworkable. At first, route caching was envisaged as a possible solution to speed up forwarding. However, this approach was soon abandoned due to the complexity of cache management. As fast memory became cheaper, the full routing table could be stored on the line cards, making caching apparently unnecessary.

Recent work has argued that route caching is still relevant today and proposes to keep a cache for the most popular prefixes. Based on traffic traces from an ISP network, the performance of route caching may be evaluated by measuring the miss rate in percentage of the total traffic. They show that this miss rate is reasonably low. There are proposal of relying on Bloom filters in fast memory to scale the forwarding in enterprise networks. They find that such an approach has serious limitations under worst-case workloads, e.g. when routes change or links fail.

Leveraging fast memory for forwarding is one of the central issues of scalable forwarding. Numerous publications have proposed the use of TCAM for forwarding purposes. Current TCAMs allow very efficient longest prefix matching but have limitations, e.g. power consumption and price. Router vendors nowadays rely on different types of memories on their line cards, in order to ensure a high performance-cost ratio.

The present invention explores how to take advantage of the significant capabilities of switches, open source software routing, and PC based routers to build a low cost high-performance router alternative. Our prototype is capable of inter-operating with routers from multiple vendors and its performance is sufficient to handle full IP routing tables and the traffic requirements of a carrier aggregation network. However the biggest impact of the idea might be that it enables separation of the development cycles of the hardware of that of the software. As such, the present invention gains an enormous about of flexibility which might be suffice to overcome the fact that the current prototype implementation does not yet support all features offered by high-end routers. In addition, the present invention proposes an algorithm for that takes advance of the FIB which is not a traditional cache but rather offers efficient short cuts. Our proposed strategy outperforms traditional caching strategies and ensures efficient usage of the FIB while maintain low churn rates.

It is also considered to further improve the software base and plan to take advantage of the software interface. Moreover, we are investigating if it is possible for a single software router to interact with multiple switches to further increase the capacity and how to enable fail safe mechanism to overcome hardware and software failures within the software router.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

**Claims**

1.  System of routing data packets over an Internet Protocol network, wherein the system comprises:

    a computer comprising a software routing controller for computing a routing table and a forwarding table based on the routing table, and a first memory for maintaining the routing table and the forwarding table,

a switching hardware comprising a second memory for caching the forwarding table, a switching controller for managing forwarding of the data packets on the switching hardware and communication with the computer, a communication channel arranged between the computer and the switching hardware for transferring control traffic.

2. System according to claim 1,
   wherein the switching hardware comprises at least one line card having a plurality of network interfaces,
   wherein the software routing controller being adapted to relay the control traffic, and to provide a plurality of virtual interfaces corresponding to the plurality of network interfaces of the switching hardware.

3. System according to claim 1 or 2,
   wherein the second memory is faster than the first memory.

4. System according to any one of the preceding claims,
   wherein the software routing controller receives and forwards data packets including routing updates and ARP messages to the computer, updates the cached forwarding table on the switching hardware through the communication channel, and collects traffic statistics from the forwarding table of the computer and the cached forwarding table of the switching hardware.

5. System according to any one of the preceding claims,
   wherein the switching hardware further comprises a switching fabric being a fast forwarding path for particular data packets between the plurality of network interfaces, if the relevant forwarding information for the particular data packets is in the cached forwarding table,
   wherein the system further comprises a forwarding channel being a slow forwarding path for particular data packets between the switching hardware and the computer or a further computer, if the relevant forwarding information for the particular data packets is not in the cached forwarding table.

6. System according to claim 5,
   wherein the software routing controller is adapted to determine the target network interface of the switching hardware for the data packets, by associating the target network interface with one of the plurality of the virtual network interfaces on the computer.

7. System according to claim 5,
   wherein the software routing controller is adapted to rewrite the layer-2 header of the data packets on the basis of the association of the network interface, prior to sending the data packets back to the switching hardware, and
   wherein the switching fabric is adapted to forward the data packets using the rewritten layer-2 header to the target network interface.

8. System according to any one of claims 4 to 7,
   wherein the updates to the cached forwarding table comprise entries recently computed by the computer and entries of popular destinations according to the statistics from the forwarding table of the computer.

9. System according to claim 8,
   wherein the software routing controller is adapted to dynamically define a set of entries to be placed in the forwarding table cache, the set cardinality not exceeding a given number m.

10. Method of routing data packets over an Internet Protocol network, wherein the method comprises the steps of:

    computing a routing table and a forwarding table based on the routing table by a software routing controller running on a computer, and maintaining the routing table and the forwarding table in a first memory of the computer,
    caching the forwarding table in a second memory of a switching hardware, managing forwarding of the data packets on the switching hardware and communication with the computer by a switching controller of the switching hardware,
    transferring the control traffic through a communication channel arranged between the computer and the switching hardware.

11. Method according to claim 10, wherein the switching hardware comprises at least one line card having a plurality of network interfaces, wherein the method further comprises the steps of: relaying the control traffic and providing a plurality of virtual interfaces corresponding to the plurality of network interfaces of the switching hardware, by the software routing controller.

12. Method according to any one of claims 10 to 11, further comprises the steps of:

receiving and forwarding the data packets including routing updates and ARP messages to the computer by the software routing controller,

updating the cached forwarding table on the switching hardware through the communication channel by the software routing controller, and

collecting traffic statistics from the forwarding table of the computer and the cached forwarding table of the switching hardware, by the software routing controller.

13. Method according to any one of claims 10 to 12, wherein the switching hardware further comprises a switching fabric being a fast forwarding path, and wherein a forwarding channel being a slow forwarding path is provided between the computer and the switching hardware, wherein the method further comprises the steps of:

forwarding particular data packets between the plurality of network interfaces through the switching fabric if the relevant forwarding information for the particular data packets is in the cached forwarding table, or

forwarding particular data packets between the switching hardware and the computer or a further computer, if the relevant forwarding information for the particular data packets is not in the cached forwarding table.

14. Method according to any one of claims 10 to 13, further comprises the step of:

determining the target network interface of the switching hardware for the data packets by the software routing controller, by associating the target network interface with one of the plurality of the virtual network interfaces on the computer.

15. Method according to any one of claims 10 to 14, further comprises the steps of:

rewriting layer-2 header of the data packets on the basis of the association of the network interface by the software routing controller, prior to sending the data packets back to the switching hardware, and

forwarding the data packets using the rewritten layer-2 header to the target network interface by the switching hardware.

Fig. 1

Fig. 2

Programmable switch

Fig. 3

Fig. 4

(a) Baseline slow path requirements.

Fig. 4

(b) Impact of bin size on slow path rate.

Fig. 4

(c) Baseline churn for various FIB sizes.

Fig. 5

(a) Scalability for TRBASE.

Fig. 5

(b) Slow path penalty for TROUT.

Fig. 5

(c) Slow path rate over time for TROUT.

Fig. 6

(a) Popularity across destination prefixes.

Fig. 6

(b) Impact of update lag on slow path rate.

Fig. 6

(c) Churn for optimal strategy.

Fig. 7

(a) FIB cache churn.

Fig. 7

FIB cache size

(b) Slow path requirements.

Fig. 7

(c) Slow path requirements.

Europäisches
Patentamt

European
Patent Office

Office européen
des brevets

## EUROPEAN SEARCH REPORT

Application Number

EP 11 15 2551

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rob Sherwood, Glen Gibby, Kok-Kiong Yapy,Guido Appenzellery, Martin Casado, Nick McKeowny, Guru Parulkary: "FlowVisor: A Network Virtualization Layer", , 14 October 2009 (2009-10-14), XP002639208, Retrieved from the Internet: URL:http://www.openflow.org/downloads/technicalreports/openflow-tr-2009-1-flowvisor.pdf [retrieved on 2011-05-27] * the whole document * ----- | 1-15 | INV. H04L12/56 |
| X | WO 2009/042919 A2 (NICIRA NETWORKS [US]; CASADO MARTIN [US]; SHENKER SCOTT [US]; AMIDON K) 2 April 2009 (2009-04-02) * paragraphs [0028], [0031], [0038], [0053] * ----- | 1-15 | |
| X | "Interaction of OpenFlow with PCE", IP.COM JOURNAL, IP.COM INC., WEST HENRIETTA, NY, US, 17 November 2009 (2009-11-17), XP013135389, ISSN: 1533-0001 * the whole document * ----- | 1-15 | TECHNICAL FIELDS SEARCHED (IPC)<br><br>H04L |

The present search report has been drawn up for all claims

| Place of search | Date of completion of the search | Examiner |
|---|---|---|
| Munich | 1 June 2011 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 2551

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2011

| Patent document cited in search report | | Publication date | Patent family member(s) | | Publication date |
|---|---|---|---|---|---|
| WO 2009042919 | A2 | 02-04-2009 | AU 2008304243 | A1 | 02-04-2009 |
| | | | CA 2700866 | A1 | 02-04-2009 |
| | | | EP 2193630 | A2 | 09-06-2010 |
| | | | JP 2010541426 | T | 24-12-2010 |
| | | | US 2009138577 | A1 | 28-05-2009 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. AWEYA.** IP Router Architecture: an Overview. *Journal of Systems Architecture,* 1999, vol. 46, 483-511
- **Y. ZHOU ; J. PHILBIN.** The Multi-Queue replacement algorithm for second level buffer caches. *Proceedings of the 2001 USENIX Annual Technical Conference,* 2001, 91-104
- **N MEGIDDO ; D. MOHDA.** ARC: A self-tuning, low overhead replacement cache. *Proc. of 2nd USENIX conference on File Storage Technologies,* 31 April 2003
- **R. WHITTLE.** SRAM-based IP forwarding eliminates the need for route aggregation. *Internet draft, draft-whittle-sram-ip-forwarding-01, work in progress,* October 2007
- **M. DOBRESCU ; N. EGI ; K. ARGYRAKI ; B. CHUN ; K. FALL ; G. IANNACONNE ; A. KNIES ; M. MANESH ; S. RATSANAMY.** RouteBricks: Exploiting Parallelism to scale Software Routers. *Proc. of the 22nd ACM Symposium on Operating Systems Principles (SOSP,* October 2009
- *ARJSTA NETWORKS. Fos: An extensible operating system,* 2009, www.aristanetworks.com/en/EOS
- **EDWARDS, J.** *Enterprises cut costs with open-source routers,* 2009, http://www.computerworld.com/s/article/9133851
- **J. REXFORD ; J. WANG, Z. X. ; ZHANG, Y.** Bgp routing stability of popular destinations. *Proc. AC-MIMC,* 2002
- *Quagga Rouling Suile,* http://www.quagga.net
- **FOULI, K. ; MALER, M.** The road to Carrier-Grade Ethernet. *IEEE Communications Magazine,* March 2009, vol. 47, 3
- **MCKEOWN, N. ; ANDERSON, T. ; BALAKRISHNAN, H. ; PARULKAR, G. ; PETERSON, L. ; REXFORD, J. ; SHENKER, S. ; TURNER, J.** OpenFlow: enabling innovation in campus networks. *ACM CCR,* 2008

- **CLAFFY, K. C ; BROWNLEE, N.** Understanding Internet traffic streams: Dragonflies and Tortoises. *IEEE Communications Magazine*
- **FANG, W. ; PETERSON, L.** Inter-as traffic patterns and their implications. *Proc. It, "EE Global Internet,* 1999
- **FELDMANN, A. ; GREENBERG, A. ; LUND, C ; REINGOLD, N. ; REXFORD, J. ; TRUE, F.** Deriving traffic demands for operational IP networks: Methodology and experience. *Proc. ACM SIGCOMM,* 2000
- **WALLERICH, J. ; DREGER, H. ; FELDMANN, A. ; KRISHNAMURTHY, B. ; WILLINGER, W.** A methodology for studying persistency aspects of internet 110ws. *ACM CCR,* 2005
- **MAENNEL, 0. ; FELDMANN, A.** Realistic BGP traffic for test labs. *Proc. ACM SIGCOMM,* 2002
- *CISCO. NetFlow services and applications. White paper, available from,* 1999, http://www.cisco.com/warp/public/732/netflow
- **CLAISE, B.** Specification ofthe IP flow information export (IPFIX) protocol for the exchange of IP traffic t10w information. *Internet Engineering Task Force, RFC510 I,* 2008
- **PHAAL, P. ; PANCHEN, S. ; MCKEE, N.** InMon Corporalion's sFlow: A Method for Monitoring Traffic in Switched and Routed Networks. Request for Comments 3176. *Internet Engineering Task Force,* September 2001
- **DOBRESCU, M. ; EGI, N. ; ARGYRAKI, K. ; CHUN, B. ; FALL, K. ; IANNACCONE, G. ; KNIES, A. ; MANESH, M. ; RATNASAMY, S.** Route Bricks: exploiting parallelism to scale software routers. *Proc. o/ACMSOSP,* 2009
- **YANG, X. ; CLARK, D. ; BERGER, A.** NIRA: anew inter-domain mulling architecture. *IEEE/ACMTrans. Netw.,* 2007, vol. 15 (4), 775-788
- **BALLANI, H. ; FRANCIS, P. ; CAO, T. ; WANC, J.** Making routers last longer with viaggre. *Proc. NSDI,* 2009